# EUROPEAN PATENT APPLICATION

(11) **EP 4 656 298 A1**
(43) Date of publication of application: **03.12.2025**
(21) Application number: 25175432.1
(22) Date of filing: 09.05.2025
(51) Int. Cl.: B05B 13/04, B05B 15/52, B05B 12/08, B05B 15/55, B41J 3/407, B05B 15/58, B05B 1/08

(54) **PAINTING SYSTEM**

(30) Priority: 30.05.2024 JP 2024087657
(71) Applicant: ABB SCHWEIZ AG, 5400 Baden (CH)
(72) Inventor: IIDA, Kisumi, Tokyo, 1416022 (JP)
(74) Representative: Zimmermann & Partner Patentanwälte mbB

(57) **Abstract**

[Problem] The objective lies in providing a painting system which is capable of improving performance in terms of expelling air bubbles and contaminants inside a painting head unit.

[Solution] A painting robot (10) comprises: a painting head unit (50) provided with a painting head (53); a robot arm (R1) which causes the painting head unit (50) to move to a desired position; and a control unit comprising a head control unit (90) for controlling operation of the painting head (53), and a robot arm control unit (70) for controlling operation of the robot arm (R1), the robot arm control unit (70) performs the following control: head movement control for moving an attitude of the painting head unit (50) from an ejection position at which droplets are ejected, so that air bubbles (B1) present inside the painting head (53) are caused to move; and attitude restoring control for restoring the attitude of the painting head unit (50) to the ejection position, and, during or immediately after the attitude restoring control, the head control unit (90) causes droplet ejection control to be implemented, in order to cause the droplets to be ejected from the nozzles (54).

## Description

### [Technical Field]

The present invention relates to a painting system comprising a painting robot.

### [Background Art]

Robot painting employing robots has become the norm on painting lines for painting vehicles such as automobiles. For example, Patent Document 1 describes a configuration comprising a deaeration module, and a tank serving as an air bubble removal member, etc. as an exemplary configuration relating to robot painting.

### [Prior Art Documents]

### [Patent Documents]

[Patent Document 1] JP 7066035 B1

### [Summary of the Invention]

### [Problems to be Solved by the Invention]

The configuration of Patent Document 1 enables air bubbles flowing through a flow path to be removed. Furthermore, contaminants flowing through the flow path can also be removed by means of a filter. However, it is difficult to remove air bubbles and contaminants which penetrate into an inkjet painting head unit.

Moreover, air bubbles and contaminants remaining inside the painting head unit cause defects in ejecting paint droplets from nozzles, or make it impossible for the paint droplets to be ejected.

The present invention has been devised in light of this situation, and the objective thereof lies in providing a painting system which is capable of improving performance in terms of expelling air bubbles and contaminants inside a painting head unit.

### [Means for Solving the Problems]

In order to solve the problem above, a first aspect of the present invention provides a painting system comprising a painting robot for painting a painting area of a vehicle, characterized in that the painting robot comprises: a painting head unit provided with a plural ity of nozzles for ejecting paint droplets, an internal flow path for supplying the nozzles with liquid paint from an external supply line, and a painting head which is driven in order to push droplets out from the nozzles; a robot arm which has the painting head unit mounted on a tip end thereof and causes the painting head unit to move to a desired position; and a control unit comprising a head control unit for controlling operation of a piezoelectric element of the painting head, and a robot arm control unit for controlling operation of the robot arm, the robot arm control unit performs control to cause the robot arm to implement the following: head movement control for moving an attitude of the painting head unit from an ejection position at which the droplets are ejected, so that air bubbles present inside the internal flow path are caused to move by a difference in specific gravity between the droplets and the air bubbles; and attitude restoring control for restoring the attitude of the painting head unit to the ejection position, after the head movement control, and, immediately after the attitude restoring control or during and immediately after the attitude restoring control, the head control unit causes droplet ejection control to be implemented, in order to cause the droplets to be ejected from the nozzles of the painting head.

### [Effects of the Invention]

The present invention makes it possible to provide a painting system which is capable of improving performance in terms of expelling air bubbles and contaminants inside a painting head unit.

### [Brief Description of the Drawings]

[Fig. 1] is a schematic configuration diagram showing the overall configuration of a painting robot according to an embodiment of the present invention.
[Fig. 2] shows a schematic configuration of a painting system comprising the painting robot shown in fig. 1.
[Fig. 3] shows a state in which a nozzle-forming face of a painting head unit of the painting robot shown in fig. 1, from which paint is ejected, is seen from a front face.
[Fig. 4] shows a schematic configuration for supplying paint to nozzles of the painting robot shown in fig. 1.
[Fig. 5] is a view in cross section showing a configuration of the painting robot shown in fig. 1 in the vicinity of a row-direction supply flow path, a nozzle pressurization chamber and a row-direction discharge flow path.
[Fig. 6] is a plan view showing the configuration of the nozzle-forming face of another painting head unit different from the painting head unit shown in fig. 3.
[Fig. 7] shows an image of the configuration in the vicinity of the nozzle pressurization chamber shown in fig. 5, where air bubbles and contaminants have collected inside the nozzle pressurization chamber.
[Fig. 8] shows an image of operation for expelling air bubbles and contaminants from a painting head unit of the painting robot shown in fig. 1, where (a) shows a state in which the painting head unit has been inverted, (b) shows a state in which the painting head unit is being agitated, and (c) shows a state in which the attitude of the painting head unit has been restored to the ejection position.
[Fig. 9] shows an image of operation for expelling air bubbles and contaminants from a painting head unit of the painting robot shown in fig. 1, where (a) shows a state in which paint is being ejected in order to eject air bubbles and contaminants, (b) shows a state in which the nozzle-forming face is being wiped, and (c) shows a state in which a test pattern is being printed.
[Fig. 10] (a) shows an example of the test pattern printed in the state of fig. 9(c), and (b) is an enlargement of a region A of the test pattern in (a).

### [Embodiments of the Invention]

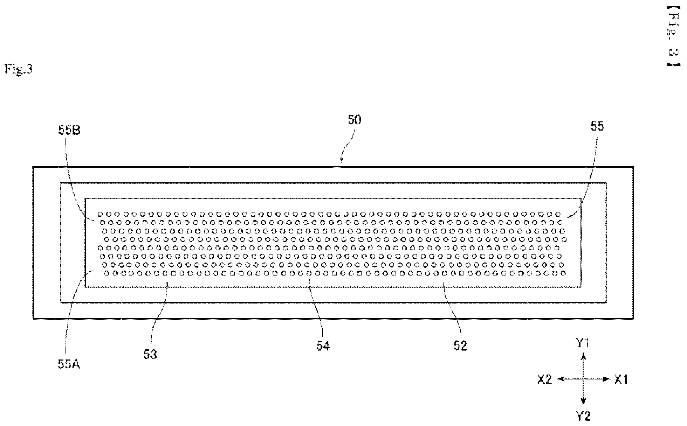

A painting system 1 and a painting robot 10 according to an embodiment of the present invention will be described below with reference to the drawings. It should be noted that in the following description, the X direction is a longitudinal direction of a nozzle-forming face 52 (painting head 53), the X1 side is the right-hand side of fig. 3, and the X2 side is the left-hand side of fig. 3, as required. Furthermore, the Y direction is a short-side direction (width direction) of the nozzle-forming face 52 (painting head 53), the Y1 side is the upper side of the page in fig. 3, and the Y2 side is the lower side of the page in fig. 3.

### (1. Outline of painting system 1 and painting robot 10)

The painting system 1 and painting robot 10 of this embodiment serve to perform "painting" of an object being painted, which is a vehicle or a vehicle part (a vehicle part constituting a portion of the vehicle will also be described as a vehicle below) positioned on a painting line in an automobile manufacturing plant, and the purpose of the painting system 1 and the painting robot 10 is to form a paint film on a surface of the object being painted in order to protect the surface and impart an attractive appearance. Vehicles moving along the painting line at predetermined time intervals therefore need to be painted with a desired painting quality in a fixed time.

Furthermore, the painting system 1 and painting robot 10 according to this embodiment are capable not only of forming the paint film, but also of forming various types of designs and images on the object being painted, namely a vehicle or a vehicle part. It should be noted that the object being painted is not limited to a vehicle or a vehicle part, provided that it is a component that needs painting, such as various types of components other than automotive components (e.g., external components for aircraft and railroads), etc.

### (1-1. Overall configuration of painting system 1 and painting robot 10)

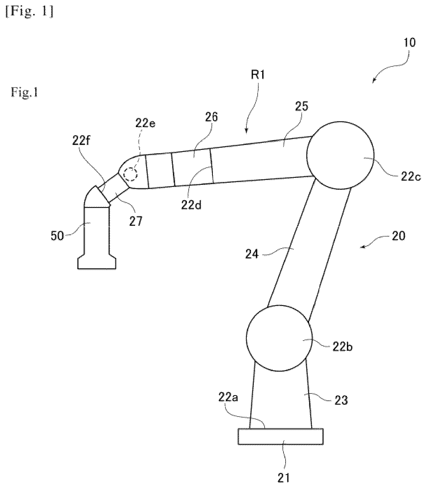

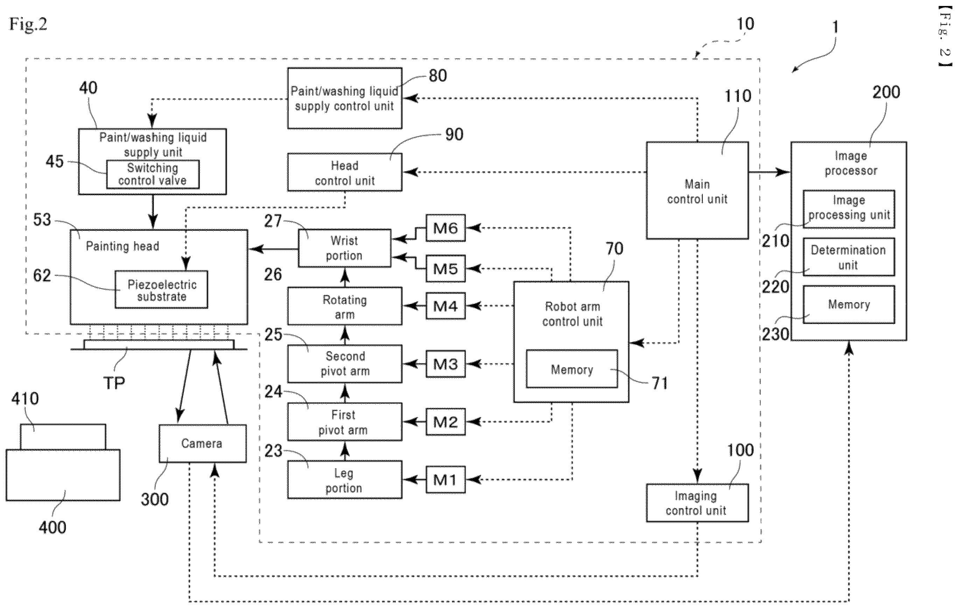

Fig. 1 is a schematic configuration diagram showing the overall configuration of the painting robot 10 according to an embodiment of the present invention. Fig. 2 shows a schematic configuration of the painting system 1 comprising the painting robot 10 shown in fig. 1. As shown in fig. 2, the painting system 1 comprises the painting robot 10, an image processor 200, a camera 300, and a wiping means 400.

### (1-2. Painting robot 10)

As shown in fig. 1, the painting robot 10 comprises a robot main body 20 and a painting head unit 50 as its main components. The painting robot 10 shown in fig. 1 is depicted as a 6-axis vertical articulated robot by way of example, but the painting robot 10 may be a robot of any type, such as a vertical articulated robot having a different number of axes to 6, a horizontal articulated robot, or an orthogonal robot.

### (1-3. Robot main body 20)

As shown in fig. 1, the robot main body 20 comprises, as its main components: a stand 21, first to sixth rotary shafts 22a-22f, a leg portion 23, a first pivot arm 24, a second pivot arm 25, a rotating arm 26, a wrist portion 27, and motors M1-M6 (see fig. 2) for driving the above components. It should be noted that the parts from the leg portion 23 to the wrist portion 27 correspond to a robot arm R1, but parts other than these such as the stand 21 may also correspond to the robot arm R1.

Among these, the stand 21 is a part which is installed at a point of installation such as a floor surface, but the stand 21 may equally be capable of travel in relation to the point of installation. Furthermore, the leg portion 23 is a part standing upright from the stand 21, and is provided so as to be rotatable in relation to the stand 21 via the first rotary shaft 22a by means of driving of the motor M1 (see fig. 2). Note that the leg portion 23 may equally be configured not to rotate in relation to the stand 21.

Furthermore, the first pivot arm 24 is provided at an upper end of the leg portion 23 so as to be pivotable via the second rotary shaft 22b by means of driving of the motor M2. The second pivot arm 25 is further provided on a tip end side of the first pivot arm 24 so as to be pivotable via the third rotary shaft 22c by means of driving of the motor M3.

The rotating arm 26 is furthermore provided on a tip end side of the second pivot arm 25 so as to be rotatable about the second pivot arm 25. The rotating arm 26 is rotatable via the fourth rotary shaft 22d by means of driving of the motor M4. The wrist portion 27 is furthermore provided on a tip end side of the rotating arm 26. The wrist portion 27 is capable of rotational movement about a shaft portion having a plurality of (such as two) different orientations, for example, by means of driving of the motor M5 and the motor M6. The rotary shafts enabling this rotational movement are the fifth rotary shaft 22e and the sixth rotary shaft 22f, respectively, in fig. 1. This enables the orientation of the painting head unit 50 to be controlled very accurately. Note that there may be any number of shaft portions provided that there are at least two.

Furthermore, the painting head unit 50 is mounted on the wrist portion 27, but the painting head unit 50 may also be detachably provided on the wrist portion 27.

### (1-4. Paint/washing liquid supply unit 40)

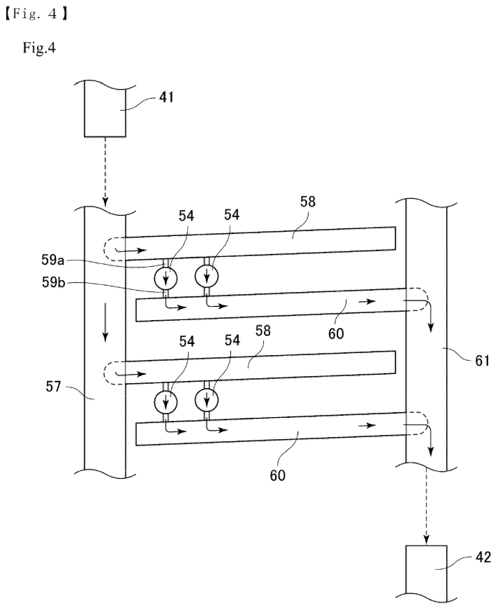

The painting system 1 and the painting robot 10 are provided with a paint/washing liquid supply unit 40, as shown in fig. 2. The paint/washing liquid supply unit 40 is a part for supplying paint or washing liquid toward the painting head unit 50. To this end, the paint/washing liquid supply unit 40 comprises: a supply line 41 (see fig. 4) for supplying the paint from a paint storage portion which is not depicted or for supplying the washing liquid from a washing liquid storage portion which is not depicted; a pump which is not depicted; valves, etc. which are not depicted; and a return flow path 42 for recovering paint which has not been ejected or dirty washing liquid.

Here, the paint/washing liquid supply unit 40 is provided with a switching control valve 45. The switching control valve 45 is a control valve for switching supply of paint from the paint storage portion which is not depicted and supply of washing liquid from the washing liquid storage portion which is not depicted, and is actuated by means of control by a paint/washing liquid supply control unit 80 which will be described later. Providing such a switching control valve 45 allows either paint or washing liquid to be selectively supplied by the paint/washing liquid supply unit 40.

It should be noted that when a configuration is adopted where the paint is supplied from outside the painting robot 10, the painting robot 10 need not comprise a part for storing the paint, and the part for storing the paint may be provided outside the painting robot 10.

### (1-5. Painting head unit)

The painting head unit 50 will be described next. Fig. 3 shows a state in which the nozzle-forming face 52 of the painting head unit 50, from which paint is ejected, is seen from a front face. As shown in fig. 3, the painting head unit 50 comprises a head cover (not depicted) and various components are built into the head cover. As shown in fig. 3, a plurality of nozzle rows 55 comprising nozzles 54 extending in a direction inclined in relation to a longitudinal direction of the painting head unit 50 are provided on the nozzle-forming face 52. In this embodiment, the nozzle rows 55 are provided with: first nozzle rows 55A which are present on one side (Y2 side) in a main scanning direction (Y direction); and second nozzle rows 55B which are present on another side (Y1 side) in the main scanning direction.

It should be noted that drive timing of the nozzles 54 is controlled when paint is ejected so that droplets ejected from nozzles 54 in the second nozzle rows 55B land between droplets ejected from adjacent nozzles 54 in the first nozzle rows 55A. This makes it possible to increase the density of dots during painting.

As shown in fig. 3, there is a single painting head 53 on the nozzle-forming face 52. However, a head group comprising multiple painting heads 53 may also be present on the nozzle-forming face 52. A configuration in which the plurality of painting heads 53 are aligned in a staggered arrangement may be cited as an example in this case, but the painting heads 53 in the head group need not have a staggered arrangement.

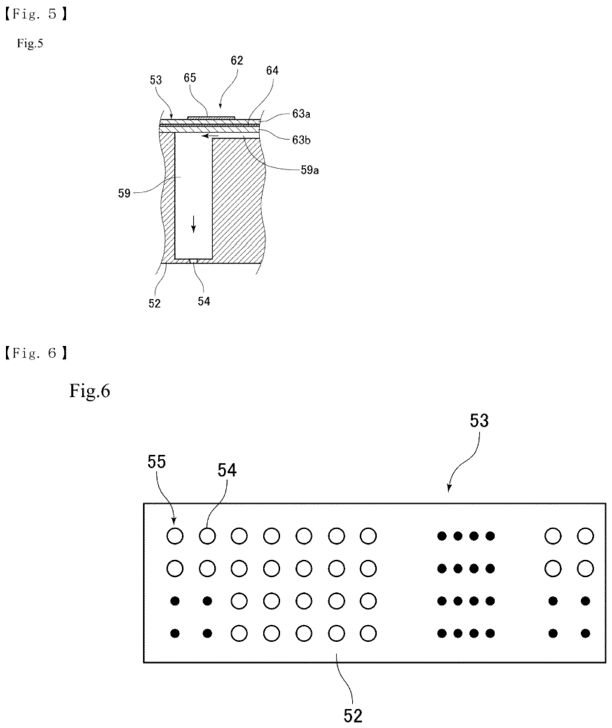

Fig. 4 shows a schematic configuration for supplying paint to the nozzles 54. Fig. 5 is a view in cross section showing a configuration in the vicinity of a row-direction supply flow path 58, a nozzle pressurization chamber 59 and a row-direction discharge flow path 60. As shown in fig. 4 and 5, the painting head 53 comprises: a supply-side large flow path 57, row-direction supply flow paths 58, nozzle pressurization chambers 59, row-direction discharge flow paths 60, and a discharge-side large flow path 61. The supply-side large flow path 57 is a flow path through which the paint is supplied from a supply path 41. Furthermore, the row-direction supply flow paths 58 are flow paths through which the paint inside the supply-side large flow path 57 is distributed.

Furthermore, the nozzle pressurization chambers 59 are connected to the row-direction supply flow paths 58 via nozzle supply flow paths 59a. By this means, the paint is supplied from the row-direction supply flow paths 58 to the nozzle pressurization chambers 59. The nozzle pressurization chambers 59 are provided correspondingly with the number of nozzles 54, and the paint inside can be ejected from the nozzles 54 using a piezoelectric substrate 62 which will be described later.

Furthermore, the nozzle pressurization chambers 59 are connected to the row-direction discharge flow paths 60 via nozzle discharge flow paths 59b. The paint ejected from the nozzles 54 is therefore discharged from inside the nozzle pressurization chambers 59 to the row-direction discharge flow paths 60 via the nozzle discharge flow paths 59b. Furthermore, the row-direction discharge flow paths 60 are connected to the discharge-side large flow path 61. The discharge-side large flow path 61 is a flow path in which the paint discharged from each of the row-direction discharge flow paths 60 merges. The discharge-side large flow path 61 is connected to a return flow path 42.

By virtue of this configuration, the paint supplied from the supply path 41 is ejected from the nozzles 54 via the supply-side large flow path 57, the row-direction supply flow paths 58, the nozzle supply flow paths 59a, and the nozzle pressurization chambers 59. Furthermore, the paint which has not been ejected from the nozzles 54 is returned from the nozzle pressurization chambers 59 to the return flow path 42 via the nozzle discharge flow paths 59b, the row-direction discharge flow paths 60, and the discharge-side large flow path 61.

It should be noted that fig. 4 shows a configuration in which one row-direction discharge flow path 60 is arranged correspondingly with one row-direction supply flow path 58. However, it is also possible for multiple (e.g., two) row-direction discharge flow paths 60 to be arranged correspondingly with one row-direction supply flow path 58. Furthermore, it is equally possible for one row-direction discharge flow path 60 to be arranged correspondingly with multiple row-direction supply flow paths 58.

Furthermore, as shown in fig. 5, the piezoelectric substrate 62 is arranged on a top face (the face on the opposite side to the nozzle 54) of the nozzle pressurization chamber 59. The piezoelectric substrate 62 comprises two piezoelectric ceramic layers 63a, 63b constituting piezoelectric bodies, and further comprises a common electrode 64 and an individual electrode 65. The piezoelectric ceramic layers 63a, 63b are members capable of expanding and contracting when an external voltage is applied thereto. Ferroelectric ceramic materials such as lead zirconate titanate (PZT), NaNb03, BaTi03, (BiNa)Nb03, and BiNaNb5015 may be used as the piezoelectric ceramic layers 63a, 63b.

Furthermore, as shown in fig. 5, the common electrode 64 is arranged between the piezoelectric ceramic layer 63a and the piezoelectric ceramic layer 63b. A common-electrode surface electrode (not depicted) is furthermore formed on an upper face of the piezoelectric substrate 62. The common electrode 64 and the common-electrode surface electrode are electrically connected through a via conductor (not depicted) present on the piezoelectric ceramic layer 63a. Furthermore, individual electrodes 65 are respectively arranged in locations facing the nozzle pressurization chambers 59. The part of the piezoelectric ceramic layer 63a between the common electrode 64 and the individual electrode 65 is polarized in a thickness direction. The piezoelectric ceramic layer 63a is therefore distorted under a piezoelectric effect when a voltage is applied to the individual electrode 65. When a predetermined drive signal is applied to the individual electrode 65, the piezoelectric ceramic layer 63b therefore undergoes a relative change so as to reduce the volume of the nozzle pressurization chamber 59, and paint is ejected as a result.

It should be noted that the common electrode 64 is arranged on the top face of the nozzle pressurization chamber 59 in fig. 5, but this does not mean that the configuration is limited to that shown in fig. 5 in which the common electrode 64 is arranged on the top face of the nozzle pressurization chamber 59. For example, it is possible to adopt a configuration in which the common electrode 64 is arranged on a side face (a face orthogonal or roughly orthogonal to the top face) of the nozzle pressurization chamber 59, or to adopt any other configuration provided that the paint can be properly ejected from the nozzles 54.

### (1-6. Other configuration of painting head unit)

Another configuration of the painting head unit 50 will be described next. Fig. 6 is a plan view showing the configuration of the nozzle-forming face 52 of another painting head unit 50. As shown in fig. 6, the nozzle rows 55 may be formed by arranging a plurality of nozzles 54 side-by-side along the short-side direction (width direction; Y direction) of the painting head 53. It should be noted that in the configuration shown in fig. 6, the nozzle rows 55 are formed by arranging the plurality of nozzles 54 side-by-side in the short-side direction (width direction; main scanning direction) of the painting head 53, but it is equally possible to adopt a configuration in which only one (a single) nozzle 54 is arranged in the short-side direction (width direction; main scanning direction) of the painting head 53. That is to say, a nozzle row 55 may consist of one nozzle 54.

Furthermore, when the vehicle is painted using a painting head 53 such as shown in fig. 6, painting may be performed in a state in which the longitudinal direction of the painting head 53 is slightly inclined in relation to the main scanning direction of the painting head 53. For example, since the nozzle rows 55 are inclined by a predetermined angle in relation to the main scanning direction in the configuration of the painting head 53 shown in fig. 3, the short-side direction of the painting head 53 shown in fig. 6 should be inclined by a predetermined angle in relation to the main scanning direction of the painting head 53. This inclination makes it possible to perform painting comparable with that of the painting head 53 shown in fig. 3 simply by adjusting the timing of ejecting paint from the nozzles 54.

### (1-7. Control configuration of painting system 1)

The control configuration for controlling operation of the painting system 1 will be described next. Note that the control configuration described below corresponds to the control unit. As shown in fig. 2, the painting robot 10 comprises: a robot arm control unit 70, a paint/washing liquid supply control unit 80, a head control unit 90, an imaging control unit 100, and a main control unit 110. Furthermore, the painting robot 10 is connected to the image processor 200 and further comprises the camera 300 and the wiping means 400, to thereby construct the painting system 1.

Moreover, the robot arm control unit 70, paint/washing liquid supply control unit 80, head control unit 90, imaging control unit 100, main control unit 110, and an image processing unit 210 which will be described later are configured from a central processing unit (CPU), a memory such as a storage area (read only memory (ROM) and random access memory (RAM), or non-volatile memory, etc.), and other components. Moreover, the image processing unit 210 may employ a graphics processing unit (GPU) instead of or as well as a CPU which has excellent image processing performance.

Furthermore, the painting robot 10 may also comprise various types of sensors which are not depicted, with output from these sensors being input to any of the robot arm control unit 70, paint/washing liquid supply control unit 80, head control unit 90, imaging control unit 100, and main control unit 110. Examples of the various types of sensors which may be cited include an acceleration sensor, an angular velocity sensor, a position detection sensor for detecting the position of each drive unit, and an image sensor, etc., but other types of sensors may also be used.

Here, the robot arm control unit 70 is a part for controlling driving of the motors M1-M6. The robot arm control unit 70 comprises a memory 71 which stores programs and data created by robot teaching.

The robot arm control unit 70 controls driving of the motors M1-M6 on the basis of the programs and data stored in the memory 71, and image processing by the image processing unit 210 of the image processor 200. By means of this control, the painting head unit 50 can be made to pass, at a predetermined speed, through a desired position for performing painting, and to stop at a predetermined position. It should be noted that the memory 71 is provided in the painting robot 10, but the memory 71 may also be external to the painting robot 10, and information may be sent/received to/from this memory 71 via a wired or wireless communication means.

Furthermore, the paint/washing liquid supply control unit 80 is a part for controlling the supply of paint or washing liquid to the painting head unit 50, and specifically controls the operation of the pump and valves, etc. provided in the paint/washing liquid supply unit 40. Furthermore, the paint/washing liquid supply control unit 80 controls operation of the switching control valve 45 to achieve a state in which either paint or washing liquid is selectively supplied from the paint storage portion which is not depicted or from the washing liquid storage portion which is not depicted. The paint/washing liquid supply control unit 80 further controls: a supply pressure when the paint is supplied to the painting head 53, and a recovery pressure when the paint which has not been ejected from the painting head is recovered via the return flow path.

It should be noted that the paint/washing liquid supply control unit 80 preferably controls the operation of the pump and valves so that the paint or washing liquid is supplied at a constant pressure to the painting head unit 50 from which the paint or washing liquid is supplied. Note that the paint/washing liquid supply control unit 80 corresponds to a pressure control unit.

Furthermore, the head control unit 90 is a part for controlling operation of the piezoelectric substrate 62 inside the painting head unit 50 on the basis of image processing by the image processing unit 210. Furthermore, the imaging control unit 100 is a part for controlling operation of the camera 300 which will be described later.

Furthermore, the main control unit 110 is a part for sending predetermined control signals to the robot arm control unit 70, the paint/washing liquid supply control unit 80, the head control unit 90, and the imaging control unit 100 so that the motors M1-M6, the paint/washing liquid supply unit 40 and the piezoelectric substrate 62 collaborate to paint the object being painted.

Furthermore, the painting system 1 is provided with the image processor 200. The image processor 200 comprises the image processing unit 210, a determination unit 220, and a memory 230. The image processing unit 210 is a part for creating image data for each painting path constituting the pathway on which the painting head 53 performs painting.

Furthermore, the determination unit 220 is a part for making a determination regarding a test pattern imaged by the camera 300 operating on the basis of control by the imaging control unit 100. The determination unit 220 is capable of determining whether or not there are ejection defects in the nozzles 54, and the extent of any ejection defects, from imaging data obtained by imaging the test pattern, and determination image data pre-stored in the memory 230. Note that the determination unit 220 corresponds to a determination means.

The memory 230 is a part for storing image data for each painting path correspondingly with a painting sequence, and is also capable of storing test pattern images and results of determinations made by the determination unit 220.

It should be noted that a computer, for example, corresponds to the image processor 200, and this computer may be a component forming part of the painting robot 10 or may be provided separately from the painting robot 10. When the image processor 200 is provided separately from the painting robot 10, data is sent and received between the image processor 200 and the painting robot 10 by means of wired communication or wireless communication. It should be noted that even if the image processor 200 is provided separately from the painting robot 10, the image processor 200 may be included in the concept of the painting robot 10 or may not be included in the concept of the painting robot 10.

### (1-8. Camera 300 and wiping means 400)

The camera 300 and the wiping means 400 will be described next. The camera 300 corresponding to an imaging means can be positioned in the vicinity of an area where the test pattern is painted on the object being painted by the painting head 53. Accordingly, the camera 300 may be fixedly arranged in the vicinity of the area which is painted, or may be mounted on the robot arm R1 so as to move together with the painting head 53. Furthermore, the camera 300 may be installed outside a painting booth in which the vehicle is painted.

Operation of the camera 300 is controlled by means of the imaging control unit 100. Furthermore, the camera 300 is connected to the image processor 200 in such a way as to be capable of transmitting captured imaging data by means of wireless communication or wired communication. Moreover, the camera 300 comprises an image sensor such as a CCD (charge coupled device) sensor or a CMOS (complementary metal oxide semiconductor) sensor.

Furthermore, the wiping means 400 is provided outside the painting line on which vehicles are painted by means of the painting head 53 (that is, at a location where there is no interference with the location where the vehicles are painted). The wiping means 400 is a means for wiping the nozzle-forming face 52, and comprises wires and/or a sponge, etc.

The wiping means 400 comprises, for example, an elongate or planar wiping portion 410 for wiping the nozzle-forming face 52. Accordingly, when the nozzle-forming face 52 has been placed in contact with the wiping portion, the robot arm R1 is actuated to move the nozzle-forming face 52 so that the nozzle-forming face 52 can be wiped.

### (2. Action)

The action of the painting system 1 and painting robot 10 having the above configuration will be described below.

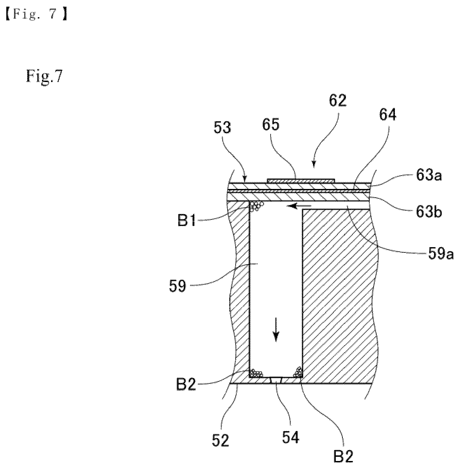

When a predetermined amount of paint is ejected from a painting head 53 such as shown in fig. 5, a predetermined amount of air bubbles and/or contaminants may collect in the flow paths of the painting head 53 (row-direction supply flow paths 58, nozzle supply flow paths 59a, nozzle discharge flow paths 59b, row-direction discharge flow paths 60, and discharge-side large flow path 61, etc.), and in the nozzle pressurization chambers 59. Fig. 7 shows a state in which predetermined amounts of air bubbles B1 and contaminants B2 have collected in the nozzle pressurization chamber 59. As shown in fig. 7, there is a risk of a deterioration in paint ejection performance from the nozzles 54 when the air bubbles B1 and contaminants B2 are left to accumulate in that state.

In this embodiment, the air bubbles B1 and contaminants B2 are therefore expel led from the nozzles 54 by actuating the robot arm R1 and the painting head 53 in the following manner.

### (a) Vertical inversion of painting head 53 from ejection position

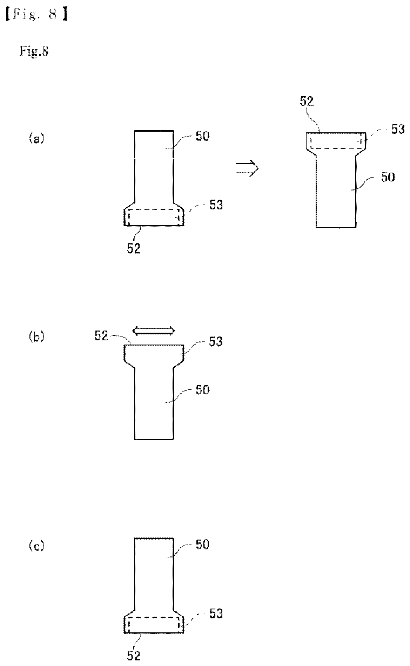

First of all, as shown in fig. 8(a), the robot arm control unit 70 actuates the robot arm R1 by means of a command from the main control unit 110, and vertically inverts the painting head unit 50 (painting head 53). The air bubbles B1 and contaminants B2 then move through the paint, and the air bubbles B1 and contaminants B2 float around in the paint within the flow paths and the nozzle pressurization chambers 59 inside the painting head 53, due to specific gravity between the paint and air bubbles B1 and the paint and contaminants B2.

### (b) Agitation of painting head 53

In the state of vertical inversion, the robot arm control unit 70 then actuates the robot arm R1 by means of a command from the main control unit 110, and agitates the painting head unit 50 (painting head 53), as shown in fig. 8(b). Even more of the air bubbles B1 and contaminants B2 then float in the paint. In particular, contaminants B2 which have accumulated in a specific place without floating after the vertical inversion alone then readily float in the paint.

It should be noted that the agitation may be applied after vertical inversion of the painting head unit 50, but may equally be performed at an intermediate stage of the operation of vertical inversion. Furthermore, the agitation may be applied both at an intermediate stage of the operation of vertical inversion and after the vertical inversion. Furthermore, "agitation" includes operations to impart a constant amplitude to the painting head 30, and therefore includes not only vigorous shaking, but also vibration of the painting head 53.

Furthermore, the "agitation" may be reciprocating movement in a specific direction, movement in an arc shape, regular or irregular movement within a specific plane, or regular or irregular movement within a specific space. In particular, when the painting head 53 is agitated so as to undergo regular or irregular movement within a specific space, the air bubbles B1 and contaminants B2 floating in the paint can be increased.

### (c) Restoring attitude to ejection position

After the painting head 53 has been agitated, or while the painting head 53 is being agitated, the robot arm control unit 70 actuates the robot arm R1 by means of a command from the main control unit 110, and restores the attitude of the painting head unit 50 (painting head 53) to the ejection position at which paint is ejected, as shown in fig. 8(c).

### (d) Ejection of paint, and expulsion (of air bubbles B1 and contaminants B2)

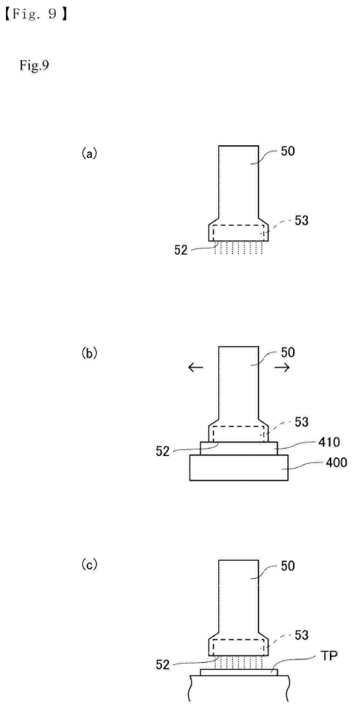

The head control unit 90 then drives the piezoelectric substrate 62 by means of a command from the main control unit 110, in order to eject paint from the painting head 53, as shown in fig. 9(a). The air bubbles B1 and contaminants B2 floating in the paint are expelled from the nozzles 54 together with the paint by means of this ejection. At this time, paint is preferably ejected from all of the nozzles 54 in order to expel the air bubbles B1 and contaminants B2 floating in the paint. However, paint need not be ejected from some of the nozzles 54 or from nozzles 54 in one zone. Furthermore, the head control unit 90 may cause the droplets to be ejected from the nozzles 54 of the painting head 53 not only immediately after the attitude restoring control with respect to the painting head unit 50 (painting head 53), but also while the attitude is being restored and immediately thereafter.

By performing these operations from vertical inversion of the painting head 53 to ejection of paint, it is possible to expel air bubbles B1 and contaminants B2 which have collected in the painting head 53.

### (e) Wiping of nozzle-forming face 52

The robot arm control unit 70 then actuates the robot arm R1 by means of a command from the main control unit 110, and moves the painting head 53 to outside the painting line on which painting is performed, as shown in fig. 9(b). The nozzle-forming face 52 is then pressed against the wiping portion 410 of the wiping means 400 which is provided outside the painting line, and the nozzle-forming face 52 is moved while still pressed against the wiping portion 410. The nozzle-forming face 52 is wiped by the wiping means 400 (wiping portion 410) as a result.

Paint adhering to the nozzle-forming face 52 is removed by the wiping. This therefore prevents droplets from being ejected together with paint adhering to the nozzle-forming face 52 when the droplets are ejected from the nozzles 54.

It should be noted that the paint recovery pressure needs to be set higher than the supply pressure at which the paint is supplied to the painting head 53, depending on the type of paint. In such a case, air is very likely to be drawn in from the nozzles 54, and air bubbles B1 will readily be formed. With paints of this type, it is therefore preferable for the droplet ejection control for causing the paint to be ejected from the nozzles 54 to be performed before the surface of the nozzle-forming face 52 is wiped, and for the nozzle-forming face 52 to be wiped by the wiping means 400 (wiping portion 410) after this.

### (f) Printing of test pattern TP

After the nozzle-forming face 52 has been wiped, the head control unit 90 drives the piezoelectric substrate 62 by means of a command from the main control unit 110 in order to eject paint onto the object being painted, and a predetermined test pattern TP is printed, as shown in fig. 9(c). The test pattern TP serves to check for gaps in the paint ejected from the nozzles 54, as is normally performed in inkjet printers. By checking the test pattern TP, it is possible to judge which nozzle(s) 54 has(have) a paint ejection defect.

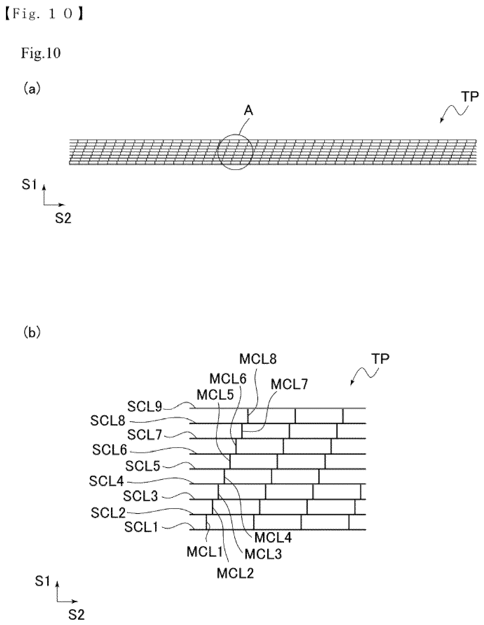

Here, fig. 10 shows an example of the test pattern TP. It should be noted that fig. 10(a) shows an example of the test pattern TP printed in the state of fig. 9(c), and fig. 10(b) is an enlargement of a region A of the test pattern TP in fig. 10(a). As shown in fig. 10(a) and 10(b), the test pattern TP comprises: a plurality of check lines MCL extending in the main scanning direction (the direction S1 in fig. 10), and a plurality of check lines SCL extending in a sub-scanning direction (the direction S2 in fig. 10).

The check lines SCL (SCL1-SCL9) extending in the sub-scanning direction are check lines which are formed when each of the plurality of nozzles 54 provided on the nozzle-forming face 52 of the painting head 53 reaches a specific position in the main scanning direction, and the check lines are formed by droplets of paint ejected from the nozzles 54 which have reached the specific position.

Furthermore, the check lines MCL (MCL1-MCL8) extending in the main scanning direction are check lines which are formed by an operation performed by all of the nozzles 54, in which droplets of paint are continuously ejected multiple times from any nozzle 54 while the painting head 53 is being moved in the main scanning direction, and the nozzle 54 ejecting the paint droplets is switched. The number of check lines MCL and check lines SCL varies according to the number of nozzles provided on the nozzle-forming face 52.

It should be noted that the test pattern TP shown in fig. 10 is used to determine whether any of the plurality of nozzles 54 is clogged, so the check lines SCL extending in the sub-scanning direction are not necessarily required, and the test pattern may comprise only the check lines MCL extending in the main scanning direction.

### (g) Imaging by camera 300

After the test pattern TP has been printed, the imaging control unit 100 actuates the camera 300 by means of a command from the main control unit 110 to capture an image of the test pattern TP, whereby imaging data is obtained. The imaging data is then sent to the image processor 200 by way of wireless or wired communication, and the imaging data is stored in the memory 230.

### (h) Determination by determination unit 220

The determination unit 220 of the image processor 200 then compares the imaging data stored in the memory 230 and the determination image data, extracts unpainted check lines MCL from the test pattern TP, and determines that there is an ejection defect in nozzles 54 corresponding to the unpainted check lines MCL (corresponding to check lines MCL which are not formed because of a painting gap).

It should be noted that when ejection defects in the nozzles 54 satisfy a given condition, the determination unit 220 deems there to be an ejection defect in the painting head 53 as a whole. Here, a given condition being satisfied includes a situation in which a given number of missing check lines MCL (painting gaps) has been reached in the test pattern TP, and a situation in which a given number of missing check lines MCL (painting gaps) in a certain area has been reached, but other situations may also constitute the given condition.

### (i) Washing of painting head 53

When the determination unit 220 deems there to be an ejection defect in the painting head 53 as a whole, the painting/washing liquid supply control unit 80 switches the switching control valve 45 in order to switch from a paint supply state to a washing liquid ejection state, by means of a command from the main control unit 110. Based on a command from the main control unit 110, the paint/washing liquid supply control unit 80 then actuates the pump and valves (not depicted) in the paint/washing liquid supply unit 40 so that the washing liquid is supplied to the painting head 53 in order to wash the painting head 53. This this makes it possible to resolve the state of ejection defects in the nozzles 54.

However, if the ejection defects in the nozzles 54 still satisfy the given condition despite the series of operations from vertical inversion to washing of the painting head 53, the series of operations from vertical inversion to washing may once again be repeated. Furthermore, if the ejection defects in the nozzles 54 cannot be resolved and are still affecting painting quality, despite the series of operations from vertical inversion to washing, the painting head 53 (painting head unit 50) may be replaced.

### (3. Additional notes)

Details of the disclosure of the embodiment described above will be understood as follows, for example.
[1] Specifically, in a painting system 1 comprising a painting robot 10 for painting a painting area of a vehicle, the painting robot 10 comprises: a painting head unit 50 provided with a painting head 53 comprising a plurality of nozzles 54 for ejecting paint droplets; a robot arm R1 which has the painting head unit 50 mounted on a tip end thereof and causes the painting head unit 50 to move to a desired position; and a control unit comprising a head control unit 90 for controlling operation of the painting head 53, and a robot arm control unit 70 for controlling operation of the robot arm R1, the robot arm control unit 70 performs control to cause the robot arm R1 to implement the following: head movement control for moving an attitude of the painting head unit 50 from an ejection position at which the droplets are ejected, so that air bubbles present inside the painting head 53 are caused to move by a difference in specific gravity between the droplets and the air bubbles; and attitude restoring control for restoring the attitude of the painting head unit 50 to the ejection position, after the head movement control, and, immediately after the attitude restoring control or during and immediately after the attitude restoring control, the head control unit 90 causes droplet ejection control to be implemented, in order to cause the droplets to be ejected from the nozzles 54 of the painting head 53.
   The painting head unit 50 is thus moved in order to move the air bubbles B1 and contaminants B2, and droplets are ejected from all nozzles 54 after the attitude of the painting head unit 50 has subsequently been restored, whereby the air bubbles B1 and contaminants B2 which have moved through the painting head 53 can be expelled together with the droplets by means of the change in attitude. As a result, it is possible to reduce air bubbles B1 and contaminants B2 remaining inside the internal flow path, etc. of the painting head 53, and it is possible to suppress defects in ejecting paint droplets from the nozzles 54 and the inability to eject paint droplets.
[2] Furthermore, in accordance with the embodiment above and in addition to the details disclosed in [1] above, the robot arm control unit 70 preferably performs control to vertically invert the painting head unit 50 which is in the ejection position, as a movement position in the head movement control.
   By vertically inverting the painting head unit 50 in this way, the air bubbles B1 are more likely to move inside the internal flow path, etc. of the painting head 53. Furthermore, contaminants B2 such as pigments in the paint which have settled inside the painting head 53 are more likely to float in the paint. The air bubbles B1 and contaminants B2 moving inside the painting head 53 can therefore be expelled together with the droplets more reliably.
[3] Furthermore, in accordance with the embodiment above and in addition to [1] and [2] above or details disclosed in a combination thereof, the robot arm control unit 70 preferably agitates the painting head unit 50 in the head movement control.
   By agitating the painting head unit 50 in this way, the air bubbles B1 are more likely to move inside the internal flow path, etc. of the painting head 53. Furthermore, contaminants B2 such as pigments in the paint which have settled inside the painting head 53 are more likely to float in the paint. The air bubbles B1 and contaminants B2 moving inside the painting head 53 can therefore be expelled together with the droplets more reliably.
[4] Furthermore, in accordance with the embodiment above and in addition to the details disclosed in any of [1] to [3] above or a combination thereof, preferably, the painting system 1 comprises a wiping means 400 for wiping a nozzle-forming face 52 of the painting head unit 50, and the nozzle-forming face 52 is wiped by the wiping means after the droplet ejection control.
   By using the wiping means 400 to wipe the nozzle-forming face 52 after the droplet ejection control, it is possible to prevent droplets from being ejected together with droplets adhering to the nozzle-forming face 52 when a vehicle is actually painted. It is furthermore possible to prevent the droplets adhering to the nozzle-forming face 52 from drying and becoming difficult to remove from the nozzle-forming face 52.
[5] Furthermore, in accordance with the embodiment above and in addition to the details disclosed in any of [1] to [4] above or a combination thereof, preferably, the painting system comprises: a camera 300 (imaging means) capable of imaging a painting area painted by the painting head 53, an imaging control unit 100 for controlling operation of the camera 300 (imaging means), and a determination unit 200 (determination means) for making a predetermined determination when the painting area is imaged by the camera 300 (imaging means), and comprises a paint/washing liquid supply control unit 80 for controlling a supply of the paint to the painting head unit 50 or a supply of a washing liquid for washing the painting head 53, and, after implementing the droplet ejection control, the head control unit 90 controls operation of the painting head 53 so as to print a test pattern TP for confirming whether or not there are any defects in ejection of the droplets from each of the nozzles 54, the imaging control unit 100 controls operation of the imaging means so as to acquire determination image data by imaging a predetermined painting area after the test pattern TP has been printed, and, when the determination unit 220 (determination means) has determined on the basis of the determination image data that ejection defects in the plurality of nozzles 54 satisfy a given condition, the paint/washing liquid supply control unit 80 implements washing control with respect to the painting head 53 by supplying the washing liquid to the painting head 53.
   The test pattern TP is thus printed after the droplet ejection control, and the determination unit 220 (determination means) makes a determination regarding the test pattern TP in order to confirm whether or not defects in the nozzles 54 satisfy a given condition, whereby it is possible to suitably judge whether or not the painting head 53 should be washed. If the ejection defects in the nozzle 54 satisfy the given condition, washing control is then performed with respect to the painting head 53, making it possible to prevent painting defects when the vehicle is painted.
[6] Furthermore, in accordance with the embodiment above and in addition to the details disclosed in any of [1] to [5] above or a combination thereof, the robot arm control unit 70 preferably agitates the painting head unit 50 in the head movement control, after performing control to vertically invert the painting head unit 50.
   By agitating the painting head unit 50 in this way after vertically inverting the painting head unit 50, the air bubbles B1 are more likely to move inside the internal flow path, etc. of the painting head 53. Furthermore, contaminants B2 such as pigments in the paint which have settled inside the painting head 53 are more likely to float in the paint. The air bubbles B1 and contaminants B2 moving inside the painting head 53 can therefore be expelled together with the droplets more reliably.
[7] Furthermore, in accordance with the embodiment above and in addition to the details disclosed in any of [1] to [6] above or a combination thereof, preferably, the painting system comprises a paint/washing liquid supply control unit 80 (pressure control unit) for controlling a supply pressure when the paint is supplied to the painting head 53, and a recovery pressure when the paint which has not been ejected from the painting head is recovered via a return flow path, and, if the recovery pressure is deemed to be higher than the supply pressure in control performed by the paint/washing liquid supply control unit 80 (pressure control unit), the droplet ejection control is implemented prior to an operation to wipe the nozzle-forming face 52 performed by the wiping means 400.

For example, when the paint recovery pressure needs to be set higher than the supply pressure at which the paint is supplied to the painting head 53, depending on the type of paint, air is very likely to be drawn in from the nozzles 54, so air bubbles B1 will readily be formed. However, as described above, the paint/washing liquid supply control unit 80 (pressure control unit) implements the droplet ejection control for causing the droplets to be ejected prior to the operation to wipe the nozzle-forming face 52 with the wiping means 400 is implemented, thereby improving the performance in terms of expelling air bubbles B1 drawn in from the nozzles 54.

### (4. Variant examples)

An embodiment of the present invention was described above, but the present invention may be modified in various ways in addition to this embodiment. Variant examples will be described below.

The embodiment above employs an inkjet system in which the painting head 53 ejects the droplets from the nozzles 54 by using the piezoelectric substrate 62. However, the painting head is not limited to an inkjet system, and a dispenser system may equally be used.

Furthermore, in the embodiment above, the test pattern is printed, the printed test pattern TP is imaged by the imaging means such as the camera 300 as determination image data, and the determination unit 220 (determination means) determines whether or not defects in the nozzles 54 satisfy a given condition, based on the determination image data. However, it is equally possible for painting based on the ejected paint to be observed directly in order to check whether or not there are defects in the nozzles 54, rather than defects being determined on the basis of the determination image data acquired by printing the test pattern TP. Furthermore, the film thickness may also be measured In relation to the test pattern TP by a three-dimensional displacement meter, etc., in addition to a camera, in order to check whether or not there are defects in the nozzles 54.

### [Key to Symbols]

1··· Painting system, 10··· Painting robot, 20··· Robot main body, 21··· Stand, 22a··· First rotary shaft, 22b··· Second rotary shaft, 22c··· Third rotary shaft, 22d··· Fourth rotary shaft, 22e··· Fifth rotary shaft, 22f··· Sixth rotary shaft, 23··· Leg portion, 24··· First pivot arm, 25··· Second pivot arm, 26··· Rotating arm, 27··· Wrist portion, 40··· Paint/washing liquid supply unit, 41··· Supply line, 42··· Return flow path, 45··· Switching control valve, 50··· Painting head unit, 52··· Nozzle-forming face, 53··· Painting head, 54··· Nozzle, 55··· Nozzle row, 55A··· First nozzle row, 55B··· Second nozzle row, 57··· Supply-side large flow path, 58··· Row-direction supply flow path, 59··· Nozzle pressurization chamber, 59a··· Nozzle supply flow path, 59b··· Nozzle discharge flow path, 60··· Row-direction discharge flow path, 61··· Discharge-side large flow path, 62··· Piezoelectric substrate, 63a··· Piezoelectric ceramic layer, 63b··· Piezoelectric ceramic layer, 64··· Common electrode, 65··· Individual electrode, 70··· Robot arm control unit, 71··· Memory, 80··· Paint/washing liquid supply control unit (corresponding to pressure control unit), 90··· Head control unit, 100··· Imaging control unit, 110··· Main control unit, 200··· Image processor, 210··· Image processing unit, 220··· Determination unit (corresponding to determination means), 230··· Memory, 300··· Camera (corresponding to imaging means), 400··· Wiping means, 410··· Wiping portion, B1··· Air bubble, B2··· Contaminant, M1-M6··· Motor, MCL, SCL··· Check line, R1··· Robot arm, TP··· Test pattern

## Claims

1. Painting system comprising a painting robot for painting a painting area of a vehicle, **characterized in that**
the painting robot comprises:
a painting head unit provided with a painting head comprising a plurality of nozzles for ejecting paint droplets;
a robot arm which has the painting head unit mounted on a tip end thereof and causes the painting head unit to move to a desired position; and
a control unit comprising a head control unit for controlling operation of the painting head, and a robot arm control unit for controlling operation of the robot arm,
the robot arm control unit performs control to cause the robot arm to implement the following:
head movement control for moving an attitude of the painting head unit from an ejection position at which the droplets are ejected, so that air bubbles present inside the painting head are caused to move by a difference in specific gravity between the droplets and the air bubbles; and attitude restoring control for restoring the attitude of the painting head unit to the ejection position, after the head movement control,
and,
immediately after the attitude restoring control or during and immediately after the attitude restoring control, the head control unit causes droplet ejection control to be implemented, in order to cause the droplets to be ejected from the nozzles of the painting head.

2. Painting system according to claim 1, **characterized in that**
the robot arm control unit performs control to vertically invert the painting head unit which is in the ejection position, as a movement position in the head movement control.

3. Painting system according to claim 1 or 2, **characterized in that**
the robot arm control unit agitates the painting head unit in the head movement control.

4. Painting system according to any of claims 1, 2 or 3,
comprising a wiping means for wiping a nozzle-forming face of the painting head unit,
**characterized in that** the nozzle-forming face is wiped by the wiping means after the droplet ejection control.

5. Painting system according to any of claims 1-4, comprising:
an imaging means capable of imaging a painting area painted by the painting head, an imaging control unit for controlling operation of the imaging means, and a determination means for making a predetermined determination when the painting area is imaged by the imaging means,
and comprising a paint/washing liquid supply control unit for controlling a supply of the paint to the painting head unit or a supply of a washing liquid for washing the painting head,
**characterized in that**, after implementing the droplet ejection control, the head control unit controls operation of the painting head so as to print a test pattern for confirming whether or not there are any defects in ejection of the droplets from each of the nozzles,
the imaging control unit controls operation of the imaging means so as to acquire determination image data by imaging a predetermined painting area after the test pattern has been printed, and
when the determination means has determined on the basis of the determination image data that ejection defects in the plurality of nozzles satisfy a given condition, the paint/washing liquid supply control unit implements washing control with respect to the painting head by supplying the washing liquid to the painting head.

6. Painting system according to claim 2 or any of claims 3-5 dependent thereon, **characterized in that**
the robot arm control unit agitates the painting head unit in the head movement control, after the vertical inversion control has been performed.

7. Painting system according to claim 4 or any of claims 5 or 6 if dependent thereon,
comprising a pressure control unit for controlling a supply pressure when the paint is supplied to the painting head, and a recovery pressure when the paint which has not been ejected from the painting head is recovered via a return flow path,
**characterized in that**, if the recovery pressure is deemed to be higher than the supply pressure in control by the pressure control unit, the droplet ejection control is implemented prior to an operation to wipe the nozzle-forming face performed by the wiping means.
